# EUROPEAN PATENT APPLICATION

(11) **EP 4 083 158 A1**
(43) Date of publication of application: **02.11.2022**
(21) Application number: 20904551.7
(22) Date of filing: 18.12.2020
(51) Int. Cl.: C09J 175/08

(54) **POLYURETHANE STRUCTURAL ADHESIVE**

(30) Priority: 25.12.2019 JP 2019235077
(71) Applicant: Mitsui Chemicals, Inc., Tokyo 105-7122 (JP)
(72) Inventor: CHIKAMOTO, Takuya, Sodegaura-shi, Chiba 299-0265 (JP); YAMAMOTO, Naomi, Sodegaura-shi, Chiba 299-0265 (JP); MASUI, Masakazu, Sodegaura-shi, Chiba 299-0265 (JP); YAMADA, Masataka, Sodegaura-shi, Chiba 299-0265 (JP)
(74) Representative: Hoffmann Eitle
(86) International application number: PCT/JP2020/047480
(87) International publication number: WO 2021/132094

(57) **Abstract**

In a structural polyurethane adhesive, a polyisocyanate component contains a first prepolymer component containing a first isocyanate group-terminated urethane prepolymer which is a reaction product of a first material polyisocyanate consisting of an aromatic polyisocyanate, and a first material polyol containing a macropolyol; and a second prepolymer component containing a second isocyanate group-terminated urethane prepolymer which is a reaction product of a second material polyisocyanate consisting of an araliphatic polyisocyanate and/or an aliphatic polyisocyanate, and a second material polyol containing a polyether polyol having a number average molecular weight of 160 or more and 4800 or less. A ratio of the second prepolymer component with respect to the total amount of the first prepolymer component and the second prepolymer component is 2% by mass or more and 35% by mass or less.

## Description

### TECHNICAL FIELD

The present invention relates to a structural polyurethane adhesive.

### BACKGROUND ART

Conventionally, a structural adhesive, which is used to adhere a plurality of members in a structure (such as an automobile or a building) formed from the members, has been known.

As such a structural adhesive, for example, a two-component urethane adhesive composition containing a main agent containing urethane prepolymer (A-1), which is obtained by a reaction of polyoxypropylene diol, polyoxypropylene triol, and 4,4'diisocyanatephenyl methane, and an isocyanurate product of pentamethylene diisocyanate (CI-2); and a curing agent containing a trifunctional polypropylene polyol (B1-1) and fine particles (D-5) made of a styrene homopolymer has been proposed (for example, Patent Document 1 (Example 1) below).

### Citation List

### Patent Document

Patent Document 1: International Patent Publication No. WO2016/080508

### SUMMARY OF THE INVENTION

### PROBLEM TO BE SOLVED BY THE INVENTION

However, there is a disadvantage that the above-described two-component urethane adhesive composition does not have sufficient elongation properties and adhesive strength.

Further, the adhesive composition is required to improve an elastic modulus and suppress foaming depending on the application.

The present invention provides a structural polyurethane adhesive having excellent elongation properties and adhesive strength, capable of improving an elastic modulus, and furthermore, capable of suppressing foaming.

### MEANS FOR SOLVING THE PROBLEM

The present invention [1] includes a structural polyurethane adhesive including a polyisocyanate component and a polyol component containing a macropolyol having a number average molecular weight of 500 or more and 10000 or less, and an average number of hydroxyl groups of 1.9 or more and 4.0 or less, wherein the polyisocyanate component contains a first prepolymer component containing a first isocyanate group-terminated urethane prepolymer which is a reaction product of a first material polyisocyanate consisting of an aromatic polyisocyanate, and a first material polyol containing a macropolyol; and a second prepolymer component containing a second isocyanate group-terminated urethane prepolymer which is a reaction product of a second material polyisocyanate consisting of an araliphatic polyisocyanate and/or an aliphatic polyisocyanate, and a second material polyol containing a polyether polyol having a number average molecular weight of 160 or more and 4800 or less, and a ratio of the second prepolymer component with respect to the total amount of the first prepolymer component and the second prepolymer component is 2% by mass or more and 35% by mass or less.

The present invention [2] includes the structural polyurethane adhesive described in the above-described [1], wherein a content ratio of the second material polyisocyanate with respect to the total amount of the second prepolymer component is 1.0% by mass or less.

The present invention [3] includes the structural polyurethane adhesive described in the above-described [1] and [2], wherein the second material polyisocyanate consists of an araliphatic polyisocyanate and/or an alicyclic polyisocyanate.

The present invention [4] includes the structural polyurethane adhesive described in any one of the above-described [1] to [3], wherein the second material polyol contains a polyether polyol having an average number of hydroxyl groups of 2 or more and 4 or less.

The present invention [5] includes the structural polyurethane adhesive described in any one of the above-described [1] to [4], being a two-component curable adhesive including a main agent consisting of the polyisocyanate component and a curing agent consisting of the polyol component.

The present invention [6] includes the structural polyurethane adhesive described in any one of the above-described [1] to [5], being a solventless-type adhesive.

### EFFECT OF THE INVENTION

In the structural polyurethane adhesive of the present invention, the polyisocyanate component contains a first prepolymer component and a second prepolymer component. Then, the first prepolymer component contains a first isocyanate group-terminated urethane prepolymer which is a reaction product of a first material polyisocyanate consisting of an aromatic polyisocyanate, and a first material polyol containing a macropolyol. Further, the second prepolymer component contains a second isocyanate group-terminated urethane prepolymer which is a reaction product of a second material polyisocyanate consisting of an araliphatic polyisocyanate and/or an aliphatic polyisocyanate, and a second material polyol containing a polyether polyol having a number average molecular weight of 160 or more and 4800 or less. Therefore, the structural polyurethane of the present invention has excellent elongation properties and adhesive strength.

In addition, in the structural polyurethane adhesive of the present invention, since a ratio of the second prepolymer component to the total amount of the polyisocyanate component is within a predetermined range, it is possible to have excellent elongation properties and adhesive strength, improve an elastic modulus, and furthermore, suppress foaming.

### DESCRIPTION OF EMBODIMENTS

The structural polyurethane adhesive of the present invention is a structural adhesive defined by JIS K 6800 (1985), and is specifically a "reliable adhesive that can bear heavy loads for a long period of time".

More specifically, the structural polyurethane adhesive contains, as essential components, a polyisocyanate component containing a liberated (free) isocyanate group, and a polyol component containing a liberated (free) hydroxyl group.

The structural polyurethane adhesive may be a one-component curable adhesive in which a polyisocyanate component and a polyol component are mixed in advance, or a two-component curable adhesive that includes a main agent (A solution) made of a polyisocyanate component, and a curing agent (B solution) made of a polyol component, and the individually prepared main agent and curing agent are mixed when being used.

In terms of workability and handleability, preferably, the structural polyurethane adhesive is a two-component curable adhesive.

The polyisocyanate component is a prepolymer composition containing a urethane prepolymer having two or more isocyanate groups at its molecule terminal (hereinafter, referred to as an isocyanate group-terminated urethane prepolymer).

More specifically, the polyisocyanate component contains a first prepolymer component obtained by using an aromatic polyisocyanate (described later), and a second prepolymer component obtained by using an araliphatic polyisocyanate (described later) and/or an aliphatic polyisocyanate (described later).

The first prepolymer component contains a first isocyanate group-terminated urethane prepolymer.

The first isocyanate group-terminated urethane prepolymer is a reaction product obtained by reacting a first material polyisocyanate with a first material polyol so that an isocyanate group becomes excessive with respect to a hydroxyl group.

The first material polyisocyanate consists of an aromatic polyisocyanate.

Examples of the aromatic polyisocyanate include aromatic polyisocyanate monomers and aromatic polyisocyanate derivatives.

Examples of the aromatic polyisocyanate monomers include aromatic diisocyanates such as tolylene diisocyanate (2,4- or 2,6-tolylene diisocyanate or a mixture thereof) (TDI), phenylene diisocyanate (m-, p-phenylene diisocyanate or a mixture thereof), 4,4'-diphenyl diisocyanate, 1,5-naphthalene diisocyanate (NDI), diphenyl methane diisocyanate (4,4'-, 2,4'-, or 2,2'-diphenyl methane diisocyanate or a mixture thereof) (MDI), 4,4'-toluidine diisocyanate (TODI), and 4,4'-diphenyl ether diisocyanate.

These aromatic polyisocyanate monomers can be used singly or in combination of two or more.

Examples of the aromatic polyisocyanate derivatives include multimers (for example, dimers, trimers (for example, isocyanurate derivative, iminooxadiazine dione derivative), pentamers, heptamers, etc.), allophanate derivatives (for example, allophanate derivative produced by a reaction of the above-described aromatic polyisocyanate monomer with a known monohydric alcohol and/or a known dihydric alcohol (described below)), polyol derivatives (for example, polyol derivative produced by a reaction of the aromatic polyisocyanate monomer with a known trihydric or more alcohol (described below) (alcohol adduct)), etc.), biuret derivatives (for example, biuret derivative produced by a reaction of the above-described aromatic polyisocyanate monomer with water or amines, etc.), urea derivatives (for example, urea derivative produced by a reaction of the above-described aromatic polyisocyanate monomer with diamine, etc.), oxadiazinetrione derivatives (for example, oxadiazinetrione produced by a reaction of the above-described aromatic polyisocyanate monomer with carbon dioxide, etc.), carbodiimide derivatives (carbodiimide derivative produced by a decarboxylation condensation reaction of the above-described aromatic polyisocyanate monomer, etc.), uretdione derivatives, and uretonimine derivatives of the above-described aromatic polyisocyanate monomer.

Furthermore, as the aromatic polyisocyanate derivative, polymethylene polyphenyl polyisocyanate (crude MDI, polymeric MDI, or polynuclear diphenylmethane diisocyanate) is used.

These aromatic polyisocyanate derivatives can be used singly or in combination of two or more.

These aromatic polyisocyanates can be used singly or in combination of two or more.

In terms of elongation properties, adhesive strength, and elastic modulus, as the aromatic polyisocyanate, preferably, an aromatic polyisocyanate monomer is used. More preferably, an aromatic diisocyanate is used. Even more preferably, a diphenylmethane diisocyanate is used. Particularly preferably, a 4,4'-diphenylmethane diisocyanate is used.

The first material polyol contains, as an essential component, a macropolyol.

The macropolyol is a compound having two or more hydroxyl groups, and a number average molecular weight of 300 or more, preferably 400 or more, and, for example, 10000 or less.

In the first material polyol, the macropolyol is not especially limited. For example, as the polyol component (curing agent), the macropolyol described below is used. These macropolyols can be used singly or in combination of two or more.

As the macropolyol as the first material polyol, preferably, polyether polyol (described below), polyester polyol (described below), and polycarbonate polyol (described below) are used. More preferably, polyether polyol (described below) is used. Even more preferably, polyoxy (C2 to 3) alkylene polyol (described below) is used.

The macropolyol as the first material polyol has a number average molecular weight (molecular weight calibrated with standard polystyrene measured with gel permeation chromatograph (GPC)) of, for example, 300 or more, preferably 400 or more, more preferably 500 or more, and, for example, 10000 or less, preferably 8000 or less, more preferably 5000 or less.

The first material polyol has a hydroxyl equivalent of, for example, 150 or more, preferably 200 or more, and, for example, 10000 or less, preferably 8000 or less.

The hydroxyl equivalent can be calculated by obtaining a hydroxyl value by an acetylation method, a phthalated method, etc. in conformity with the A method or the B method of JIS K 1557-1 (2007) (hereinafter, the same applies).

The macropolyol as the first material polyol has an average number of hydroxyl groups of, for example, 1.8 or more, preferably 2 or more, and, for example, 6 or less, preferably 4 or less, more preferably 3 or less.

The average number of hydroxyl groups is obtained by the calculation of the hydroxyl value, the hydroxyl equivalent, and the molecular weight.

The average number of hydroxyl groups can also be calculated from the preparation ratios of the material components. In such a case, the number average molecular weight can be calculated from the hydroxyl equivalent and the average number of hydroxyl groups (hereinafter, the same applies).

As the first material polyol, particularly preferably, a macropolyol having an average number of hydroxyl groups of 2, and a macropolyol having an average number of hydroxyl groups of 3 are used in combination.

When a macropolyol having an average number of hydroxyl groups of 2 and a macropolyol having an average number of hydroxyl groups of 3 are used in combination, with respect to 100 parts by mass of the total amount thereof, the macropolyol having an average number of hydroxyl groups of 2 is, for example, more than 50 parts by mass, preferably 60 parts by mass or more, and, for example, 90 parts by mass or less, preferably 80 parts by mass or less. With respect to 100 parts by mass of the total amount thereof, the macropolyol having an average number of hydroxyl groups of 3 is, for example, 10 parts by mass or more, preferably 20 parts by mass or more, and, for example, less than 50 parts by mass, preferably 40 parts by mass or less.

The first material polyol can contain, as an optional component, a low molecular-weight polyol.

The low molecular-weight polyol is a compound having 2 or more hydroxyl groups and a number average molecular weight of less than 400, preferably less than 300, and examples thereof include dihydric alcohols such as ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 2,2,2-trimethylpentanediol, 3,3-dimethylol heptane, alkane (C7 to 20) diol, 1,3- or 1,4-cyclohexanedimethanol and a mixture thereof, 1,3- or 1,4-cyclohexanediol and a mixture thereof, hydrogenated bisphenol A, 1,4-dihydroxy-2-butene, 2,6-dimethyl-1-octene-3,8-diol, bisphenol A, diethylene glycol, triethylene glycol, and dipropylene glycol; trihydric alcohols such as glycerine, trimethylolpropane, and triisopropanol amine; tetrahydric alcohols such as tetramethylol methane (pentaerythritol), and diglycerol; pentahydric alcohols such as xylitol; hexahydric alcohols such as sorbitol, mannitol, allitol, iditol, dulcitol, altritol, inositol, and dipentaerythritol; heptahydric alcohols such as perseitol; and octahydric alcohols such as sucrose.

These low molecular-weight polyols can be used singly or in combination of two or more.

The content ratio of the low molecular-weight polyol to the first material polyol is appropriately selected in a range in which the excellent effects of the present invention are not reduced.

More specifically, the content ratio of the low molecular-weight polyol to 100 parts by mass of the total amount of the first material polyol is, for example, 30 parts by mass or less, preferably 20 parts by mass or less, more preferably 10 parts by mass or less, particularly preferably 0 part by mass.

In other words, in terms of elongation properties, adhesive strength, and elastic modulus, preferably, the first material polyol does not contain a low molecular-weight polyol, and consists of a macropolyol.

The first isocyanate group-terminated urethane prepolymer can be obtained by subjecting the first material polyisocyanate and the first material polyol to a urethane-forming reaction in a ratio in which the equivalent ratio (NCO/OH) of the isocyanate group of the first material polyisocyanate to the hydroxyl group of the first material polyol is more than 1, preferably 1.3 to 50, more preferably 1.5 to 3.

The urethane-forming reaction can conform to a known method. The reaction temperature in the urethane-forming reaction is, for example, 50°C or more, and, for example, 120°C or less, preferably 100°C or less. The reaction time is, for example, 0.5 hours or more, preferably 1 hour or more, and, for example, 24 hours or less, preferably 15 hours or less.

The urethane-forming reaction can be a reaction in the absence of a solvent or can be a reaction in the presence of a known organic solvent (solution polymerization). In the solution polymerization, the mixing ratio of the organic solvent is appropriately set depending on the purpose and use. The urethane-forming reaction is preferably a reaction in the absence of a solvent.

In the above-described urethane-forming reaction, as necessary, known urethane-forming catalysts such as amines and organometallic compounds can be added in an appropriate ratio.

By producing the first isocyanate group-terminated urethane prepolymer in this manner, a first prepolymer component containing a first isocyanate group-terminated urethane prepolymer can be obtained as a reaction product.

As the first isocyanate group-terminated urethane prepolymer, preferably, a first isocyanate group-terminated urethane prepolymer which is a reaction product of an aromatic polyisocyanate and a polyether polyol is used. More preferably, a first isocyanate group-terminated urethane prepolymer which is a reaction product of a diphenylmethane diisocyanate and a polyether polyol is used.

As necessary, the first prepolymer component can contain a liberated (unreacted) first material polyisocyanate, an organic solvent, a urethane-forming catalyst, etc. in addition to the first isocyanate group-terminated urethane prepolymer.

As necessary, the liberated (unreacted) first material polyisocyanate, the organic solvent, the catalyst, etc. can be removed from the first prepolymer component by a known removal method such as thin-film distillation.

In terms of elongation properties, adhesive strength, and elastic modulus, the content ratio of the liberated (unreacted) first material polyisocyanate to the total amount of the first prepolymer component is, for example, 8.0% by mass or less, preferably 5.0% by mass or less.

Further, the content ratio of the first isocyanate group-terminated urethane prepolymer to the total amount of the first prepolymer component is, for example, 92% by mass or more, preferably 95% by mass or more, and usually 100% by mass or less.

The average number of isocyanate groups in the first prepolymer component (preferably, the first isocyanate group-terminated urethane prepolymer) (solid content) is, for example, 1.2 or more, preferably 1.5 or more, more preferably 2 or more, and, for example, 4 or less, preferably 3 or less.

The equivalent of the isocyanate group in the first prepolymer component (preferably, the first isocyanate group-terminated urethane prepolymer) (solid content) is, for example, 84 or more, preferably 150 or more, more preferably 168 or more, and, for example, 3500 or less, preferably 2800 or less, more preferably 2335 or less. The equivalent of the isocyanate group is the same as the amine equivalent, and can be obtained by the A method or B method of JIS K 1603-1 (2007).

The content of the isocyanate group in the first prepolymer component (preferably, the first isocyanate group-terminated urethane prepolymer) (solid content) (the isocyanate group content, NCO%) is, for example, 1.2% by mass or more, preferably 1.5% by mass or more, more preferably 1.8% by mass or more, even more preferably 2.0% by mass or more, particularly preferably 3.0% by mass or more, and, for example, 50% by mass or less, preferably 28% by mass or less, more preferably 25% by mass or less, even more preferably 10% by mass or less, particularly preferably 6% by mass or less.

Further, the first prepolymer component (preferably, the first isocyanate group-terminated urethane prepolymer) has the viscosity of the solid content at 30°C of, for example, 1000 mPa·s or more, preferably 5000 mPa·s or more, and, for example, 0.2 million mPa·s or less, preferably 0.1 million mPa·s or less.

The viscosity is measured using a B-type viscometer by the method described in Examples to be described below (hereinafter, the same applies).

The second prepolymer component contains a second isocyanate group-terminated urethane prepolymer.

The second isocyanate group-terminated urethane prepolymer is a reaction product obtained by reacting a second material polyisocyanate with a second material polyol so that an isocyanate group becomes excessive with respect to a hydroxyl group.

The second material polyisocyanate consists of an araliphatic polyisocyanate and/or an aliphatic polyisocyanate.

Examples of the araliphatic polyisocyanates include araliphatic polyisocyanate monomers and araliphatic polyisocyanate derivatives.

Examples of the araliphatic polyisocyanate monomers include araliphatic diisocyanates such as xylylene diisocyanate (1,3- or 1,4-xylylene diisocyanate or a mixture thereof) (XDI), tetramethyl xylylene diisocyanate (1,3- or 1,4-tetramethyl xylylene diisocyanate or a mixture thereof) (TMXDI), and ω,ω'-diisocyanate -1,4-diethyl benzene.

These araliphatic polyisocyanate monomers can be used singly or in combination of two or more.

As well as the above-described aromatic polyisocyanate derivatives, examples of the araliphatic polyisocyanate derivatives include multimers, allophanate derivatives, polyol derivatives, biuret derivatives, urea derivatives, oxadiazinetrione derivatives, carbodiimide derivatives, uretdione derivatives, and uretonimine derivatives of the araliphatic polyisocyanate monomers.

These araliphatic polyisocyanate derivatives can be used singly or in combination of two or more.

These araliphatic polyisocyanates can be used singly or in combination of two or more.

In terms of elongation properties, adhesive strength, and elastic modulus, as the araliphatic polyisocyanate, preferably, an araliphatic polyisocyanate monomer is used. More preferably, an araliphatic diisocyanate is used. Even more preferably, a xylylene diisocyanate monomer is used. Particularly preferably, a 1,3-xylylene diisocyanate is used.

Examples of the aliphatic polyisocyanates include chain aliphatic polyisocyanates and alicyclic polyisocyanates.

Examples of the chain aliphatic polyisocyanates include chain aliphatic polyisocyanate monomers and chain aliphatic polyisocyanate derivatives.

Examples of the chain aliphatic polyisocyanate monomers include chain aliphatic diisocyanates such as trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), 1,5-pentamethylene diisocyanate (PDI), 1,6-hexamethylene diisocyanate (HDI), 2,4,4- or 2,2,4-trimethyl hexamethylene diisocyanate, and 2,6-diisocyanate methyl caproate.

These chain aliphatic polyisocyanate monomers can be used singly or in combination of two or more.

As well as the above-described aromatic polyisocyanate derivatives, examples of the chain aliphatic polyisoicyanate derivatives include multimers, allophanate derivatives, polyol derivatives, biuret derivatives, urea derivatives, oxadiazinetrione derivatives, carbodiimide derivatives, uretdione derivatives, and uretonimine derivatives of the chain aliphatic polyisocyanate monomers.

These chain aliphatic polyisocyanate derivatives can be used singly or in combination of two or more.

These chain aliphatic polyisocyanates can be used singly or in combination of two or more.

Examples of the alicyclic polyisocyanates include alicyclic polyisocyanate monomers and alicyclic polyisocyanate derivatives.

Examples of the alicyclic polyisocyanate monomers include alicyclic diisocyanates such as 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethyl cyclohexyl isocyanate (isophorone diisocyanate) (IPDI), methylene bis (cyclohexyl isocyanate) (4,4'-, 2,4'-, or 2,2'-methylene bis (cyclohexyl isocyanate, Trans,Trans-isomer, Trans,Cis-isomer, or Cis,Cis-isomer of these, or a mixture thereof)) (H₁₂MDI), methyl cyclohexane diisocyanate (methyl-2,4-cyclohexane diisocyanate, methyl-2,6-cyclohexane diisocyanate), norbornane diisocyanate (various isomers or a mixture thereof) (NBDI), and bis (isocyanatomethyl) cyclohexane (1,3- or 1,4-bis (isocyanatomethyl) cyclohexane, or a mixture thereof) (H₆XDI).

These alicyclic polyisocyanate monomers can be used singly or in combination of two or more.

As well as the above-described aromatic polyisocyanate derivatives, examples of the alicyclic polyisoicyanate derivatives include multimers, allophanate derivatives, polyol derivatives, biuret derivatives, urea derivatives, oxadiazinetrione derivatives, carbodiimide derivatives, uretdione derivatives, and uretonimine derivatives of the alicyclic polyisocyanate monomers.

These alicyclic polyisocyanate derivatives can be used singly or in combination of two or more.

These alicyclic polyisocyanates can be used singly or in combination of two or more.

In terms of elongation properties, adhesive strength, and elastic modulus, as the aliphatic polyisocyanate, preferably, a chain aliphatic polyisocyanate monomer and an alicyclic polyisocyanate monomer are used. More preferably, an alicyclic polyisocyanate monomer is used. Even more preferably, an alicyclic diisocyanate is used. Even more preferably, a bis (isocyanatomethyl) cyclohexane is used. Particularly preferably, a 1,3-bis (isocyanatomethyl) cyclohexane is used.

In addition, in terms of elongation properties, adhesive strength, and elastic modulus, as the second material polyisocyanate, preferably, a polyisocyanate containing a carbon ring is used. The carbon ring is an aromatic ring and/or an alicyclic ring. Examples of the polyisocyanate containing a carbon ring include the above-described araliphatic polyisocyanate (araliphatic polyisocyanate monomer and/or derivative thereof), and the above-described alicyclic polyisocyanate (alicyclic polyisocyanate monomer and/or derivative thereof).

In other words, in terms of elongation properties and adhesive strength, the second material polyisocyanate preferably contains an araliphatic polyisocyanate and/or an alicyclic polyisocyanate. More preferably, the second material polyisocyanate consists of an araliphatic polyisocyanate and/or an alicyclic polyisocyanate. Even more preferably, the second material polyisocyanate consists of an araliphatic polyisocyanate monomer and/or an alicyclic polyisocyanate monomer. Particularly preferably, the second material polyisocyanate consists of an araliphatic polyisocyanate monomer.

The second material polyol contains, as an essential component, a polyether polyol.

Examples of the polyether polyol include polyoxy (C2 to 3) alkylene polyols and polytetramethylene ether polyols.

The polyoxy (C2 to 3) alkylene polyol is, for example, an addition polymerization product of an alkylene oxide having 2 to 3 carbon atoms using the above-described low molecular-weight polyol, a known polyamine compound, etc. as an initiator.

Examples of the alkylene oxide include propylene oxide and ethylene oxide. In addition, these alkylene oxides can be used singly or in combination of two or more. The polyoxyalkylene polyol includes, for example, random and/or block copolymer of propylene oxide and ethylene oxide.

More specific examples of the polyoxy (C2 to 3) alkylene polyol include polyoxyethylene polyols, polyoxypropylene polyols, and polyoxyethylene·polyoxypropylene (random and/or block) copolymers.

Examples of the polytetramethylene ether polyol include a ring-opening polymerization product produced by cationic polymerization of tetrahydrofuran, and amorphous (non-crystalline) polytetramethylene ether glycol produced by copolymerization of a polymerization unit of tetrahydrofuran with alkyl-substituted tetrahydrofuran or the above-described dihydric alcohol.

Amorphous (non-crystalline) means being in a liquid state at a normal temperature (25°C).

The amorphous polytetramethylene ether glycol can be obtained as, for example, a copolymer of tetrahydrofuran and alkyl-substituted tetrahydrofuran (for example, 3-methyltetrahydrofuran) (tetrahydrofuran/alkyl-substituted tetrahydrofuran (molar ratio) = 15/85 to 85/15, having a number average molecular weight of 500 to 4000, preferably 800 to 2500), or, for example, a copolymer of tetrahydrofuran and branched glycol (for example, neopentyl glycol) (tetrahydrofuran/branched glycol (molar ratio) = 15/85 to 85/15, having a number average molecular weight of 500 to 4000, preferably, 800 to 2500).

These polyether polyols can be used singly or in combination of two or more.

As the polyether polyol, preferably, polyoxy (C2 to 3) alkylene polyol is used. More preferably, polyoxypropylene polyol is used.

In terms of elongation properties and adhesive strength, the polyether polyol has a number average molecular weight (molecular weight calibrated with standard polystyrene measured with gel permeation chromatograph (GPC)) of 160 or more, preferably 240 or more, more preferably 300 or more, even more preferably 400 or more, and, in terms of adhesive strength and elastic modulus, the polyether polyol has a number average molecular weight of 4800 or less, preferably 4500 or less, more preferably 4000 or less, even more preferably 3000 or less, even more preferably 2000 or less, even more preferably 1500 or less, particularly preferably 800 or less.

In terms of adhesive strength, the polyether polyol has an average number of hydroxyl groups of, for example, 1.8 or more, preferably 2 or more, and, for example, 6 or less, preferably 4 or less, more preferably 3 or less.

In other words, the second material polyol preferably contains a polyether polyol having an average number of hydroxyl groups of 2 or more and 4 or less. Further, the second material polyol preferably contains a polyether polyol having an average number of hydroxyl groups of 2 or more and 3 or less.

Further, the second material polyol may contain, as optional components, other macropolyols (macropolyols excluding polyether polyols) and low molecular-weight polyols.

The other macropolyol is a compound having two or more hydroxyl groups, and a number average molecular weight of 300 or more, preferably 400 or more, and, for example, 10000 or less.

The other macropolyol is not especially limited. For example, as the polyol component (curing agent), the macropolyol (excluding the polyether polyol) described below is used. More specifically, the polyester polyol (described below) and the polycarbonate polyol (described below) are used. These can be used singly or in combination of two or more.

Examples of the low molecular-weight polyol include the above-described low molecular-weight polyols as the first material polyol, and these can be used singly or in combination of two or more.

The content ratio of the other polyol and the low molecular-weight polyol to the second material polyol is appropriately selected in a range in which the excellent effects of the present invention are not reduced.

More specifically, the content ratio of the other macropolyol to 100 parts by mass of the total amount of the second material polyol is, for example, 30 parts by mass or less, preferably 20 parts by mass or less, more preferably 10 parts by mass or less, particularly preferably 0 part by mass.

Further, the content ratio of the low molecular-weight polyol to 100 parts by mass of the total amount of the second material polyol is, for example, 30 parts by mass or less, preferably 20 parts by mass or less, more preferably 10 parts by mass or less, particularly preferably 0 part by mass.

In other words, in terms of elongation properties and adhesive strength, preferably, the second material polyol does not contain another macropolyol and a low molecular-weight polyol, and consists of a polyether polyol.

The second isocyanate group-terminated urethane prepolymer can be obtained by subjecting the second material polyisocyanate and the second material polyol to a urethane-forming reaction in a ratio in which the equivalent ratio (NCO/OH) of the isocyanate group of the second material polyisocyanate to the hydroxyl group of the second material polyol is more than 1, preferably 1.3 to 50, more preferably 1.5 to 3.

The urethane-forming reaction can conform to a known method. The reaction temperature in the urethane-forming reaction is, for example, 50°C or more, and, for example, 120°C or less, preferably 100°C or less. The reaction time is, for example, 0.5 hours or more, preferably 1 hour or more, and, for example, 24 hours or less, preferably 15 hours or less.

The urethane-forming reaction can be a reaction in the absence of a solvent or can be a reaction in the presence of the above-described organic solvent (solution polymerization). In the solution polymerization, the mixing ratio of the organic solvent is appropriately set depending on the purpose and use.

In the above-described urethane-forming reaction, as necessary, the above-described urethane-forming catalysts can be added in an appropriate ratio.

By producing the second isocyanate group-terminated urethane prepolymer as described above, a second prepolymer component containing a second isocyanate group-terminated urethane prepolymer can be obtained as a reaction product.

As the second isocyanate group-terminated urethane prepolymer, preferably, a second isocyanate group-terminated urethane prepolymer which is a reaction product of an araliphatic polyisocyanate and a polyether polyol is used. More preferably, a second isocyanate group-terminated urethane prepolymer which is a reaction product of a xylylene diisocyanate and a polyether polyol is used.

As necessary, the second prepolymer component can contain a liberated (unreacted) second material polyisocyanate, an organic solvent, a urethane-forming catalyst, etc. in addition to the second isocyanate group-terminated urethane prepolymer.

As necessary, the liberated (unreacted) second material polyisocyanate, the organic solvent, the catalyst, etc. can be removed from the second prepolymer component by a known removal method such as thin-film distillation.

In terms of adhesive strength, the content ratio of the liberated (unreacted) second material polyisocyanate to the total amount of the second prepolymer component is, for example, 5.0% by mass or less, preferably 1.0% by mass or less.

Further, the content ratio of the second isocyanate group-terminated urethane prepolymer to the total amount of the second prepolymer component is, for example, 95.0% by mass or more, preferably 99.0% by mass or more, and usually 100% by mass or less.

The average number of isocyanate groups in the second prepolymer component (preferably, the second isocyanate group-terminated urethane prepolymer) (solid content) is, for example, 1.2 or more, preferably 1.5 or more, more preferably 2 or more, and for example, 4 or less, preferably 3 or less.

The equivalent of the isocyanate group in the second prepolymer component (preferably, the second isocyanate group-terminated urethane prepolymer) (solid content) is, for example, 84 or more, preferably 150 or more, more preferably 168 or more, and, for example, 3500 or less, preferably 2800 or less, more preferably 2335 or less. The equivalent of the isocyanate group is the same as the amine equivalent, and can be obtained by the A method or B method of JIS K 1603-1 (2007).

The content of the isocyanate group in the second prepolymer component (preferably, the second isocyanate group-terminated urethane prepolymer) (solid content) (the isocyanate group content, NCO%) is, for example, 1.2% by mass or more, preferably 1.5% by mass or more, more preferably 1.8% by mass or more, even more preferably 2.0% by mass or more, and, for example, 50% by mass or less, preferably 28% by mass or less, more preferably 25% by mass or less, even more preferably 12% by mass or less.

Further, the second prepolymer component (preferably, the second isocyanate group-terminated urethane prepolymer) has the viscosity of the solid content at 30°C of, for example, 100 mPa·s or more, preferably 1000 mPa·s or more, and, for example, 0.5 million mPa·s or less, preferably 0.2 million mPa·s or less, more preferably 0.1 million mPa·s or less, even more preferably 50000 mPa·s or less, particularly preferably 10000 mPa·s or less.

The polyisocyanate component can be, for example, prepared by mixing the first prepolymer component and the second prepolymer component.

In terms of elongation properties, the ratio of the first prepolymer component to the total amount of the first prepolymer component and the second prepolymer component is, for example, 65% by mass or more, preferably 70% by mass or more, more preferably 75% by mass or more, even more preferably 80% by mass or more, particularly preferably 85% by mass or more, and in terms of elastic modulus and adhesive strength, the ratio of the first prepolymer component to the total amount of the first prepolymer component and the second prepolymer component is, for example, 98% by mass or less, preferably 95% by mass or less, more preferably 90% by mass or less.

In terms of adhesive strength, elongation properties, elastic modulus, and suppression of foaming, the ratio of the second prepolymer component to the total amount of the first prepolymer component and the second prepolymer component is, for example, 2% by mass or more, preferably 5% by mass or more, more preferably 10% by mass or more, even more preferably 20% by mass or more, particularly preferably 25% by mass or more, and, for example, 35% by mass or less, preferably 33% by mass or less, more preferably 31% by mass or less, even more preferably 30% by mass or less.

Further, the polyisocyanate component has the viscosity of the solid content at 30°C of, for example, 1000 mPa·s or more, preferably 5000 mPa·s or more, and, for example, 0.2 million mPa·s or less, preferably 0.1 million mPa·s or less.

The polyol component contains a macropolyol having a number average molecular weight of 500 or more and 10000 or less and an average number of hydroxyl groups of 1.9 or more and 4.0 or less as an essential component.

Examples of the macropolyol include polyether polyol, polyester polyol, polycarbonate polyol, polyurethane polyol, epoxy polyol, vegetable oil polyol, polyolefin polyol, acrylic polyol, and polymer polyol.

An example of the polyether polyol includes the above-described polyether polyol, and more specific examples thereof include the above-described (C2 to 3) alkylene polyol and the above-described polytetramethylene ether polyol.

Examples of the polyester polyol include a polycondensation product, for example, obtained by a reaction of the above-described low molecular-weight polyol and polybasic acid under known conditions.

Examples of the polybasic acid include oxalic acid, malonic acid, succinic acid, methylsuccinic acid, glutaric acid, adipic acid, 1,1-dimethyl-1,3-dicarboxypropane, 3-methyl-3-ethylglutaric acid, azelaic acid, sebacic acid, and another saturated aliphatic dicarboxylic acid (C11 to 13); maleic acid, fumaric acid, itaconic acid, and another unsaturated aliphatic dicarboxylic acid; orthophthalic acid, isophthalic acid, terephthalic acid, toluene dicarboxylic acid, naphthalene dicarboxylic acid, and another aromatic dicarboxylic acid; hexahydrophthalic acid, and another alicyclic dicarboxylic acid; other carboxylic acids such as dimer acid, hydrogenated dimer acid, and het acid, and acid anhydrides derived from these carboxylic acids such as oxalic anhydride, succinic anhydride, maleic anhydride, phthalic anhydride, 2-alkyl (C12 to C18) succinic anhydride, tetrahydrophtalic anhydride, trimellitic anhydride, and acid halides derived from these carboxylic acids such as oxalic acid dichloride, adipic acid dichloride, and sebacic acid dichloride.

Examples of the polyester polyol include plant derived polyester polyols. A specific example thereof includes a vegetable oil polyester polyol obtained by a condensation reaction of hydroxycarboxylic acid such as hydroxyl group-containing vegetable oil fatty acid (e.g., castor oil fatty acid containing ricinoleic acid, hydrogenated castor oil fatty acid containing 12-hydroxystearic acid, etc.) using the above-described low molecular-weight polyol as an initiator under known conditions.

Examples of the polyester polyol include polycaprolactone polyol and polyvalerolactone polyol obtained by ring-opening polymerization of lactones such as ε-caprolactone and γ-valerolactone or lactides such as L-lactide and D-lactide using the above-described low molecular-weight polyols (preferably, dihydric alcohol) as an initiator, and further include lactone-based polyester polyols obtained by copolymerizing such a polycaprolactone polyol or polyvalerolactone polyol with the above-described dihydric alcohol.

Examples of the polycarbonate polyol include a ring-opening polymerization product of ethylene carbonate using the above-described low molecular-weight polyol (preferably, dihydric alcohol) as an initiator, and amorphous polycarbonate polyol produced by copolymerizing dihydric alcohols such as 1,4-butanediol, 1,5-pentanediol, 3-methyl-1,5-pentanediol, and 1,6-hexanediol, and a ring-opening polymerization product.

The polyurethane polyol can be obtained as polyester polyurethane polyol, polyether polyurethane polyol, polycarbonate polyurethane polyol, or polyester polyether polyurethane polyol by a reaction of the polyester polyol, polyether polyol and/or polycarbonate polyol produced as described above with polyisocyanate in a range in which the equivalent ratio (OH/NCO) of the hydroxyl group (OH) to the isocyanate group (NCO) is more than 1.

Examples of the epoxy polyol include epoxy polyols obtained by a reaction of the above-described low molecular-weight polyol with multifunctional halohydrins such as epichlorohydrin and β-methylepichlorohydrin.

Examples of the vegetable oil polyol include hydroxyl group-containing vegetable oils such as castor oil and palm oil. For example, a castor oil polyol, or an ester-modified castor oil polyol obtained by a reaction of castor oil fatty acid and polypropylene polyol is used.

Examples of the polyolefin polyol include polybutadiene polyol and partially saponified ethylene-vinyl acetate copolymer.

Examples of the acrylic polyol include copolymers obtained by copolymerization of a hydroxyl group-containing acrylate and a copolymerizable vinyl monomer that can copolymerize with a hydroxyl group-containing acrylate.

Examples of the hydroxyl group-containing acrylate include 2-hydroxyethyl (meth)acrylate, hydroxypropyl (meth)acrylate, hydroxybutyl (meth)acrylate, 2,2-dihydroxymethylbutyl (meth)acrylate, polyhydroxyalkyl maleate, and polyhydroxyalkyl fumarate. Preferably, 2-hydroxyethyl (meth)acrylate is used.

Examples of the copolymerizable vinyl monomer include alkyl(meth)acrylates (having 1 to 12 carbon atoms) such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, isononyl (meth)acrylate, 2-ethylhexyl (meth)acrylate, and cyclohexylacrylate; aromatic vinyls such as styrene, vinyl toluene, and α-methylstyrene; vinyl cyanides such as (meth)acrylonitrile; vinyl monomers containing a carboxyl group such as (meth)acrylic acid, fumaric acid, maleic acid, and itaconic acid, or alkyl ester thereof; alkanepolyol poly(meth)acrylates such as ethyleneglycol di(meth)acrylate, butyleneglycol di(meth)acrylate, hexanediol di(meth)acrylate, oligoethyleneglycol di(meth)acrylate, trimethylol propane di(meth)acrylate, and trimethylol propane tri(meth)acrylate; and vinyl monomers including an isocyanate group such as 3-(2-isocyanate-2-propyl)-α-methylstyrene.

The acrylic polyol can be obtained by copolymerization of these hydroxyl group-containing acrylates and copolymerizable vinyl monomers in the presence of an appropriate solvent and a polymerization initiator.

The acrylic polyol includes, for example, silicone polyol and fluorine polyol.

Examples of the silicone polyol include a modified polysiloxane polyol in which a hydroxyl group is introduced to dialkyl polysiloxane, and an acrylic polyol blended with a silicone compound including a vinyl group such as γ-methacryloxy propyltrimethoxysilane as a copolymerizable vinyl monomer in the copolymerization of the above-described acrylic polyol.

An example of the fluorine polyol includes an acrylic polyol blended with a fluorine compound including a vinyl group such as tetrafluoroethylene or chlorotrifluoroethylene as a copolymerizable vinyl monomer in the copolymerization of the above-described acrylic polyol.

The polymer polyol can be obtained by a dispersion polymerization of a vinyl monomer in the above-described macropolyol (for example, polyether polyol, polyester polyol, polycarbonate polyol, polyurethane polyol, epoxy polyol, vegetable oil polyol, polyolefin polyol, or acrylic polyol).

As the macropolyol in the polymer polyol, preferably, polyether polyol is used. More preferably, polyoxy (C2 to 3) alkylene polyol is used.

More specifically, the polymer polyol is prepared by dispersing, in the macropolyol, polymer fine particles obtained by polymerizing vinyl monomer by a radical initiator (for example, salt of persulfuric acid, organic peroxide, or an azo-based compound (such as azobisisobutyronitrile)) in the macropolyol.

Examples of the vinyl monomer include styrene, acrylamide, alkyl(meth)acrylate, vinyl cyanide (acrylonitrile), and vinylidene cyanide. These vinyl monomers can be used singly or in combination of two or more. Among them, preferably, styrene, vinyl cyanide (acrylonitrile), and a combination of styrene and vinyl cyanide are used.

The content of the polymer of the vinyl monomer with respect to the polymer polyol is, for example, 2% by mass or more, preferably 5% by mass or more, and, for example, 50% by mass or less, preferably 45% by mass or less.

In the polyol component, the macropolyol has a number average molecular weight (molecular weight calibrated with standard polystyrene measured with gel permeation chromatograph (GPC)) of 500 or more, preferably 1000 or more, more preferably 1500 or more, and 10000 or less, more preferably 7500 or less, more preferably 5000 or less in terms of adhesive strength.

In the polyol component, the macropolyol has a hydroxyl equivalent of, for example, 150 or more, preferably 200 or more, and, for example, 10000 or less, preferably 8000 or less.

In the polyol component, the macropolyol has an average number of hydroxyl groups of 1.9 or more, preferably 2.0 or more, more preferably 2.3 or more, and 4.0 or less, preferably 3.5 or less, more preferably 3.0 or less in terms of adhesive strength.

As the macropolyol in the polyol component (preferably, the curing agent), preferably, polyether polyol, and vinyl monomer-modified polyol (also referred to as a polymer polyol) are used.

In terms of adhesive strength, particularly preferably, the polyol component includes a polyether polyol.

In such a case, the content ratio of the polyether polyol with respect to the total amount of the polyol component is, for example, 10% by mass or more, preferably 30% by mass or more, more preferably 50% by mass or more, and usually 100% by mass or less.

As necessary, the polyol component can include the above-described low molecular-weight polyol. These low molecular-weight polyols can be used singly or in combination of two or more.

The content ratio of the low molecular-weight polyol to the polyol component is appropriately selected in a range in which the excellent effects of the present invention are not reduced.

More specifically, the content ratio of the low molecular-weight polyol with respect to 100 parts by mass of the total amount of the polyol component is, for example, 30 parts by mass or less, preferably 20 parts by mass or less, more preferably 10 parts by mass or less, particularly preferably 0 part by mass.

In other words, in terms of adhesive strength, preferably, the polyol component does not include the low molecular-weight polyol, and consists of a macropolyol.

As necessary, the structural polyurethane adhesive can contain known additives such as compatibilizing agents, urethane-forming catalysts, anti-aging agents, antioxidants, ultraviolet absorbers, stabilizers such as heat-resistant stabilizers and polymer photostabilizers, organic solvents, pigments, dyes, antifoaming agents, dispersants, leveling agents, thixotropy-enhancing agents, antiblocking agents, mold release agents, lubricants, interlayer adjusters (such as glass beads), fillers, and viscosity modifiers.

The content ratio of the additive is not especially limited, and appropriately set depending on the purpose and use.

For example, the additive may be contained in the polyisocyanate component (for example, the main agent of the two-component curable adhesive), in the polyol component (for example, the curing agent of the two-component curable adhesive), or in both of the components, and, in addition, may be contained in a mixture (for example, a one-component curable adhesive) of the polyisocyanate component and the polyol component.

On the other hand, in terms of workability, preferably, the structural polyurethane adhesive does not contain an organic solvent. In short, preferably, the structural polyurethane adhesive is a solventless-type adhesive.

In the solventless-type adhesive, for example, the polyisocyanate component is prepared without using an organic solvent. Alternatively, the polyisocyanate component is prepared using an organic solvent and then the solvent is removed by a known method.

In the solventless-type adhesive, for example, the polyol component is prepared without using an organic solvent. Alternatively, the polyol component is prepared using an organic solvent and then the solvent is removed by a known method.

As described above, preferably, the structural polyurethane adhesive is a two-component curable adhesive including a main agent consisting of the polyisocyanate component and a curing agent consisting of the polyol component. The two-component curable adhesive is a resin composition kit (two-component kit) for forming a cured product by separately preparing the main agent and the curing agent and blending (mixing) them together in use. In other words, the main agent and the curing agent are mixed, thereby obtaining a resin mixture (polyurethane mixture), and the resin mixture is subjected to a curing reaction, thereby obtaining a cured product (polyurethane cured product).

In such a structural polyurethane adhesive, the polyisocyanate component contains a first prepolymer component and a second prepolymer component. Then, the first prepolymer component contains a first isocyanate group-terminated urethane prepolymer which is a reaction product of a first material polyisocyanate consisting of an aromatic polyisocyanate, and a first material polyol containing a macropolyol. Further, the second prepolymer component contains a second isocyanate group-terminated urethane prepolymer which is a reaction product of a second material polyisocyanate consisting of an araliphatic polyisocyanate and/or an aliphatic polyisocyanate, and a second material polyol containing a polyether polyol having a number average molecular weight of 160 or more and 4800 or less. Therefore, the above-described structural polyurethane has excellent elongation properties and adhesive strength.

In addition, in the above-described structural polyurethane adhesive, since a ratio of the second prepolymer component to the total amount of the polyisocyanate component is within a predetermined range, it is possible to have excellent elongation properties and adhesive strength, improve an elastic modulus, and furthermore, suppress foaming.

Thus, the above-described structural polyurethane adhesive is suitably used to adhere a plurality of members in a structure formed from the members. Examples of the members of a structure include the members of a building, an automobile, a transportation unit, and a ship.

In the use of the structural polyurethane adhesive, for example, a mixture including the polyisocyanate component and the polyol component is applied and cured on the member, and, as necessary, aged by a known method. The mixing ratio of the polyisocyanate component and the polyol component is appropriately set depending on the purpose and use.

In terms of workability, the mixture containing the polyisocyanate component and the polyol component has the viscosity at 25°C of, for example, 100 mPa·s or more, preferably 300 mPa·s or more, and, for example, 20000 mPa·s or less, preferably 10000 mPa·s or less.

The curing conditions include a curing temperature of, for example, 10°C or more, preferably 20°C or more, and, for example, 80°C or less, preferably 60°C or less, and a curing time of, for example, 0.5 hours or more, preferably 1 hour or more, and, for example, 10 hours or less, preferably 5 hours or less.

The aging conditions include an aging temperature of, for example, 20°C or more, preferably 25°C or more, and, for example, 80°C or less, preferably 70°C or less, and an aging time of, for example, 1 hour or more, preferably 2 hours or more, and, for example, 72 hours or less, preferably 24 hours or less.

In this manner, the structural polyurethane adhesive is cured and the members are adhered well to each other.

### Example

The present invention is described below with reference to Examples and Comparative Examples. The present invention is not limited to Examples in any way. The "parts" and "%" are based on mass unless otherwise specified. The specific numeral values used in the description below, such as mixing ratios (content ratios), property values, and parameters can be replaced with the corresponding mixing ratios (content ratios), property values, and parameters in the above-described "DESCRIPTION OF THE EMBODIMENTS", including the upper limit values (numeral values defined with "or less", and "less than") or the lower limit values (numeral values defined with "or more", and "more than").

### <Monomer Concentration>

The concentration of the monomer (the first material polyisocyanate or the second material polyisocyanate) remaining after preparing the first prepolymer component and the second prepolymer component was measured as follows.

### (1) Reference Solution for First Prepolymer Component

COSMONATE PH (B) (trade name, MDI, manufactured by Mitsui Chemicals & SKC Polyurethane Inc.) was reacted with a large excess of methanol, and the obtained crystals were recrystallized with methanol and purified.

The resulting crystals were then analyzed by NMR and LC to confirm that they were free of solvent and 2,4'-isomer (area ratio of 1% or less). The resulting crystals are referred to as "PH (B) methylurethane-forming specimen".

Then, 10 mg of PH (B) methylurethane-forming specimen was precisely weighed into a 50-mL measuring flask, the mass was recorded to dilute with dichloroethane (DCE), and the resulting solution was diluted in the measuring flask.

Thereafter, the above-described solution was collected into the 50-mL measuring flask so as to be 2 mL (A solution) and 10 mL (B solution), and each of them was diluted with dichloroethane (DCE) to be diluted in the measuring flask.

A diluted solution of the A solution was referred to as a reference solution corresponding to 0.4% of quantitative value.

Further, a diluted solution of the B solution was referred to as a reference solution corresponding to 2.0% of quantitative value.

These reference solutions were subjected to HPLC measurement under the following conditions.

Then, a calibration curve was prepared from an area value of the obtained chromatogram.

### (2) Reference Solution for Second Prepolymer Component

In a 50-mL measuring flask, 1.97 g of dibenzylamine was weighed and diluted with dichloroethane (DCE). The resulting diluted solution was referred to as a "labeling reagent".

Next, 25 mg of TAKENATE 500 (trade name, XDI, manufactured by Mitsui Chemicals, Inc.) was precisely weighed into a 50-mL measuring flask, the mass was recorded to add 10 mL of labeling reagent, and the mixture was left to stand for 10 minutes, followed by dilution with dichloroethane to be diluted in the measuring flask.

Next, the above-described solution was collected into the 50-mL measuring flask so as to be 1 mL (C solution) and 2 mL (D solution), and each of them was diluted with dichloroethane (DCE) to be diluted in the measuring flask.

A diluted solution of the C solution was referred to as a reference solution corresponding to 0.5% of quantitative value.

Further, a diluted solution of the D solution was referred to as a reference solution corresponding to 1.0% of quantitative value.

These reference solutions were subjected to HPLC measurement under the following conditions.

Then, a calibration curve was prepared from an area value of the obtained chromatogram.

### (3) Measurement

Measurement samples were prepared from the first prepolymer component and the second prepolymer component, and subjected to HPLC measurement as follows.

### <First Prepolymer Component>

A methylurethane-forming reagent (methanol/1,2-dichloroethane = 1/1 (vol/vol) mixture) was prepared in advance.

Then, 0.1 g of the first prepolymer component was precisely weighed into a 50-mL measuring flask, and the mass was recorded.

Then, 10 mL of the methylurethane-forming reagent was poured into a measuring flask to dissolve the first prepolymer component.

Thereafter, the measuring flask was capped and left to stand overnight, diluted with dichloroethane, and the solution which was diluted in the measuring flask was referred to as a measurement sample.

### <Second Prepolymer Component>

The second prepolymer component (0.1 g) was precisely weighed into a 50-mL measuring flask, and the mass was recorded.

A labeling reagent (10 mL) was added to the measuring flask, and left to stand for 10 minutes.

Thereafter, the resulting solution was diluted with dichloroethane (DCE), and the solution which was diluted in the measuring flask was referred to as a measurement sample.

### <HPLC>

The measurement sample was subjected to HPLC measurement under the following conditions, and the concentration of the unreacted first material polyisocyanate or the unreacted second material polyisocyanate was calculated based on the calibration curve.

The concentration of the unreacted second material polyisocyanate in the use of HDI and H₆XDI was also measured by the same method as described above.

### • HPLC conditions

Device: Prominence (manufactured by Shimadzu Corporation)
Pump: LC-20 AT
Degasser: DGU-20A3
Autosampler: SIL-20 A
Column thermostat: COT-20 A
Detector: SPD-20 A
Column: SHISEIDO SILICA SG-120
Column temperature: 40°C
Eluent
First Prepolymer Component and Reference Solution for First Prepolymer Component: n-hexane/methanol/1,2-dichloroethane = 84/8/8 (volume ratio)
Second Prepolymer Component and Reference Solution for Second Prepolymer Component:
   n-hexane/methanol/1,2-dichloroethane = 90/5/5 (volume ratio)
Flow rate: 0.2 mL/ min
Detection Method
First Prepolymer Component and Reference Solution for First Prepolymer Component: UV235 nm
Second Prepolymer Component and Reference Solution for Second Prepolymer Component: UV225 nm

### (Preparation Example 1) First Prepolymer Component

As a first material polyol, 560 g of ACTCOL D-2000 (trade name, polyether polyol having a number average molecular weight of 2000 and an average number of hydroxyl groups of 2, manufactured by Mitsui Chemicals, Inc.) and 240 g of ACTCOL T-3000 (trade name, polyether polyol having a number average molecular weight of 3000 and an average number of hydroxyl groups of 3, manufactured by Mitsui Chemicals, Inc.); and as a first material polyisocyante, 200 g of 4,4'-diphenylmethane diisocyanate (MDI) were mixed. The equivalent ratio (NCO/OH) at this time was 2.0.

Next, the resulting mixture was stirred at 80°C for 12 hours under a nitrogen gas stream, and subjected to a urethane-forming reaction.

In this manner, a first prepolymer component containing a first isocyanate group-terminated urethane prepolymer (MDI-based prepolymer) was obtained.

The first prepolymer component had the solid concentration of 100%, an isocyanate group content of 3.4% by mass, and the viscosity at 30°C of 24000 mPa·s.

Further, the content ratio of the first material polyisocyanate (MDI monomer) to the total amount of the first prepolymer component was 5.2% by mass.

The viscosity was measured at 30°C in conformity with JIS K 7117-1 (1999) using a B-type viscometer (model number: TVB-10M, rotor No. 4, rotation number of 12 rpm) (the same applies below).

### (Production Example 1) Second Prepolymer Component (1)

As a second material polyol, 540 g of ACTCOL T-1000 (trade name, polyether polyol having a number average molecular weight of 1000 and an average number of hydroxyl groups of 3, manufactured by Mitsui Chemicals, Inc.) and as a second material polyisocyanate, 1460 g of 1,3-xylylene diisocyanate (XDI) were mixed. The equivalent ratio (NCO/OH) at this time was 10.0.

Next, the resulting mixture was stirred at 70°C for 6 to 24 hours under a nitrogen gas stream, and subjected to a urethane-forming reaction. Thus, a second isocyanate group-terminated urethane prepolymer having an isocyanate group content of 28.8% by mass was obtained.

Thereafter, the obtained reaction product was subjected to thin-film distillation (wall temperature of 145 to 155°C, vacuum degree of 100 Pa or less, flow rate of 3 to 5 g/min, cooling water temperature of 10°C).

In this manner, a second prepolymer component (1) containing a second isocyanate group-terminated urethane prepolymer was obtained.

The second prepolymer component (1) had the solid concentration of 100%, an isocyanate group content of 8.0% by mass, and the viscosity at 30°C of 5300 mPa·s.

Further, the content ratio of the second material polyisocyanate (XDI monomer) to the total amount of the second prepolymer component was 0.14% by mass.

### (Production Example 2) Second Prepolymer Component (2)

A second material polyol and a second material polyisocyanate (XDI) were reacted in the same manner as in Production Example 1, except that ACTCOL T-700 (trade name, polyether polyol having a number average molecular weight of 700 and an average number of hydroxyl groups of 3, manufactured by Mitsui Chemicals, Inc.) was used as a second material polyol instead of ACTCOL 1000. The equivalent ratio (NCO/OH) at this time was 10.0.

Thereafter, the reaction product was subjected to thin-film distillation to obtain a second prepolymer component (2) containing a second isocyanate group-terminated urethane prepolymer in the same manner as in Production Example 1.

The second prepolymer component (2) had the solid concentration of 100%, an isocyanate group content of 10.1% by mass, and the viscosity at 30°C of 17000 mPa·s.

Further, the content ratio of the second material polyisocyanate (XDI monomer) to the total amount of the second prepolymer component was 0.10% by mass.

### (Production Example 3) Second Prepolymer Component (3)

A second material polyol and a second material polyisocyanate (XDI) were reacted in the same manner as in Production Example 1, except that ACTCOL T-300 (trade name, polyether polyol having a number average molecular weight of 300 and an average number of hydroxyl groups of 3, manufactured by Mitsui Chemicals, Inc.) was used as a second material polyol instead of ACTCOL T-1000. The equivalent ratio (NCO/OH) at this time was 10.0.

Thereafter, the reaction product was subjected to thin-film distillation to obtain a second prepolymer component (3) containing a second isocyanate group-terminated urethane prepolymer in the same manner as in Production Example 1.

The second prepolymer component (3) had the solid concentration of 100%, an isocyanate group content of 13.7% by mass, and the viscosity at 30°C of 84000 mPa·s.

Further, the content ratio of the second material polyisocyanate (XDI monomer) to the total amount of the second prepolymer component was 0.12% by mass.

### (Production Example 4) Second Prepolymer Component (4)

A second material polyol and a second material polyisocyanate (XDI) were reacted in the same manner as in Production Example 1, except that ACTCOL DL-4000 (trade name, polyether polyol having a number average molecular weight of 4000 and an average number of hydroxyl groups of 2, manufactured by Mitsui Chemicals, Inc.) was used as a second material polyol instead of ACTCOL T-1000. The equivalent ratio (NCO/OH) at this time was 10.0.

Thereafter, the reaction product was subjected to thin-film distillation to obtain a second prepolymer component (4) containing a second isocyanate group-terminated urethane prepolymer in the same manner as in Production Example 1.

The second prepolymer component (4) had the solid concentration of 100%, an isocyanate group content of 2.02% by mass, and the viscosity at 30°C of 2800 mPa·s.

Further, the content ratio of the second material polyisocyanate (XDI monomer) to the total amount of the second prepolymer component was 0.18% by mass.

### (Production Example 5) Second Prepolymer Component (5)

A second prepolymer component (5) containing a second isocyanate group-terminated urethane prepolymer was obtained in the same manner as in Production Example 1, except that the equivalent ratio (NCO/OH) of ACTCOL T-700 as a second material polyol to the 1,3-xylylene diisocyanate (XDI) as a second material polyisocyanate was set to 2.0, a urethane-forming reaction was carried out at 70°C for 8 to 36 hours, and furthermore, thin-film distillation was not carried out.

The second prepolymer component (5) had the solid concentration of 100%, an isocyanate group content of 9.8% by mass, and the viscosity at 30°C of 86000 mPa·s.

Further, the content ratio of the second material polyisocyanate (XDI monomer) to the total amount of the second prepolymer component was 8.1% by mass.

### (Production Example 6) Second Prepolymer Component (6)

A second material polyol and a second material polyisocyanate were reacted in the same manner as in Production Example 1, except that hexamethylene diisocyanate (HDI) was used as a second material polyisocyanate, and ACTCOL T-700 (trade name, polyether polyol having a number average molecular weight of 700 and an average number of hydroxyl groups of 3, manufactured by Mitsui Chemicals, Inc.) was used as a second material polyol. The equivalent ratio (NCO/OH) at this time was 10.0.

Thereafter, the reaction product was subjected to thin-film distillation to obtain a second prepolymer component (6) containing a second isocyanate group-terminated urethane prepolymer in the same manner as in Production Example 1.

The second prepolymer component (6) had the solid concentration of 100%, an isocyanate group content of 10.7% by mass, and the viscosity at 30°C of 13000 mPa·s.

Further, the content ratio of the second material polyisocyanate (HDI monomer) to the total amount of the second prepolymer component was 0.12% by mass.

### (Production Example 7) Second Prepolymer Component (7)

A second material polyol and a second material polyisocyanate were reacted in the same manner as in Production Example 1, except that 1,4-bis (isocyanatomethyl)cyclohexane (H₆XDI) was used as a second material polyisocyanate, and ACTCOL T-700 (trade name, polyether polyol having a number average molecular weight of 700 and an average number of hydroxyl groups of 3, manufactured by Mitsui Chemicals, Inc.) was used as a second material polyol. The equivalent ratio (NCO/OH) at this time was 10.0.

Thereafter, the reaction product was subjected to thin-film distillation to obtain a second prepolymer component (7) containing a second isocyanate group-terminated urethane prepolymer in the same manner as in Production Example 1.

The second prepolymer component (7) had the solid concentration of 100%, an isocyanate group content of 10.0% by mass, and the viscosity at 30°C of 69000 mPa·s.

Further, the content ratio of the second material polyisocyanate (H₆XDI monomer) to the total amount of the second prepolymer component was 0.24% by mass.

### (Production Example 8) Second Prepolymer Component (8)

A second material polyol and a second material polyisocyanate (XDI) were reacted in the same manner as in Production Example 1, except that triethylene glycol (TEG, molecular weight of 150.17) was used as a second material polyol instead of ACTCOL T-1000. The equivalent ratio (NCO/OH) at this time was 10.0.

Thereafter, the reaction product was subjected to thin-film distillation to obtain a second prepolymer component (8) containing a second isocyanate group-terminated urethane prepolymer in the same manner as in Production Example 1.

The second prepolymer component (8) had the solid concentration of 100%, and an isocyanate group content of 16.4% by mass. Since the second prepolymer component (8) was solidified in three days, the viscosity was not measured.

Further, the content ratio of the second material polyisocyanate (XDI monomer) to the total amount of the second prepolymer component was 0.28% by mass.

### (Production Example 9) Second Prepolymer Component (9)

A second material polyol and a second material polyisocyanate (XDI) were reacted in the same manner as in Production Example 1, except that ACTCOL T-5000 (trade name, polyether polyol having a number average molecular weight of 5000 and an average number of hydroxyl groups of 3, manufactured by Mitsui Chemicals, Inc.) was used as a second material polyol instead of ACTCOL T-1000. The equivalent ratio (NCO/OH) at this time was 10.0.

Thereafter, the reaction product was subjected to thin-film distillation to obtain a second prepolymer component (9) containing a second isocyanate group-terminated urethane prepolymer in the same manner as in Production Example 1.

The second prepolymer component (9) had the solid concentration of 100%, an isocyanate group content of 2.7% by mass, and the viscosity at 30°C of 5300 mPa·s.

Further, the content ratio of the second material polyisocyanate (XDI monomer) to the total amount of the second prepolymer component was 0.11% by mass.

### (Production Example 10) Second Prepolymer Component (10)

A second material polyol and a second material polyisocyanate (XDI) were reacted in the same manner as in Production Example 1, except that ACTCOL D-1000 (trade name, polyether polyol having a number average molecular weight of 1000 and an average number of hydroxyl groups of 2, manufactured by Mitsui Chemicals, Inc.) was used as a second material polyol instead of ACTCOL T-1000. The equivalent ratio (NCO/OH) at this time was 10.0.

Thereafter, the reaction product was subjected to thin-film distillation to obtain a second prepolymer component (10) containing a second isocyanate group-terminated urethane prepolymer in the same manner as in Production Example 1.

The second prepolymer component (10) had the solid concentration of 100%, an isocyanate group content of 6.1% by mass, and the viscosity at 30°C of 2100 mPa·s.

Further, the content ratio of the second material polyisocyanate (XDI monomer) to the total amount of the second prepolymer component was 0.15% by mass.

### (Production Example 11) Second Prepolymer Component (11)

As a second material polyisocyanate, 1,3-xylylene diisocyanate (XDI) was used, and as a second material polyol, ACTCOL D-400 (trade name, polyether polyol having a number average molecular weight of 400 and an average number of hydroxyl groups of 2, manufactured by Mitsui Chemicals, Inc.) was used. The equivalent ratio (NCO/OH) was set to 6.0. The second material polyol and the second material polyisocyante were reacted with the other conditions same as those in Production Example 1.

Thereafter, the reaction product was subjected to thin-film distillation to obtain a second prepolymer component (11) containing a second isocyanate group-terminated urethane prepolymer in the same manner as in Production Example 1.

The second prepolymer component (11) had the solid concentration of 100%, an isocyanate group content of 10.4% by mass, and the viscosity at 30°C of 5100 mPa·s.

Further, the content ratio of the second material polyisocyanate (XDI monomer) to the total amount of the second prepolymer component was 0.14% by mass.

### (Production Example 12) Second Prepolymer Component (12)

As a second material polyisocyanate, hexamethylene diisocyanate (HDI) was used, and as a second material polyol, ACTCOL D-400 (trade name, polyether polyol having a number average molecular weight of 400 and an average number of hydroxyl groups of 2, manufactured by Mitsui Chemicals, Inc.) was used. The equivalent ratio (NCO/OH) was set to 6.0. The second material polyol and the second material polyisocyante were reacted with the other conditions same as those in Production Example 1.

Thereafter, the reaction product was subjected to thin-film distillation to obtain a second prepolymer component (12) containing a second isocyanate group-terminated urethane prepolymer in the same manner as in Production Example 1.

The second prepolymer component (12) had the solid concentration of 100%, an isocyanate group content of 10.2% by mass, and the viscosity at 30°C of 920 mPa·s.

Further, the content ratio of the second material polyisocyanate (HDI monomer) to the total amount of the second prepolymer component was 0.23% by mass.

### (Production Example 13) Second Prepolymer Component (13)

As a second material polyisocyanate, pentamethylene diisocyanate (PDI) was used, and as a second material polyol, ACTCOL D-400 (trade name, polyether polyol having a number average molecular weight of 400 and an average number of hydroxyl groups of 2, manufactured by Mitsui Chemicals, Inc.) was used. The equivalent ratio (NCO/OH) was set to 6.0. The second material polyol and the second material polyisocyante were reacted with the other conditions same as those in Production Example 1.

Thereafter, the reaction product was subjected to thin-film distillation to obtain a second prepolymer component (13) containing a second isocyanate group-terminated urethane prepolymer in the same manner as in Production Example 1.

The second prepolymer component (13) had the solid concentration of 100%, an isocyanate group content of 10.9% by mass, and the viscosity at 30°C of 1100 mPa·s.

Further, the content ratio of the second material polyisocyanate (PDI monomer) to the total amount of the second prepolymer component was 0.20% by mass.

### (Production Example 14) Second Prepolymer Component (14)

As a second material polyisocyanate, 1,4-bis (isocyanatomethyl)cyclohexane (H₆XDI) was used, and as a second material polyol, ACTCOL D-400 (trade name, polyether polyol having a number average molecular weight of 400 and an average number of hydroxyl groups of 2, manufactured by Mitsui Chemicals, Inc.) was used. The equivalent ratio (NCO/OH) was set to 6.0. The second material polyol and the second material polyisocyante were reacted with the other conditions same as those in Production Example 1.

Thereafter, the reaction product was subjected to thin-film distillation to obtain a second prepolymer component (14) containing a second isocyanate group-terminated urethane prepolymer in the same manner as in Production Example 1.

The second prepolymer component (14) had the solid concentration of 100%, an isocyanate group content of 11.0% by mass, and the viscosity at 30°C of 8800 mPa·s.

Further, the content ratio of the second material polyisocyanate (H₆XDI monomer) to the total amount of the second prepolymer component was 0.93% by mass.

### (Production Example 15) Isocyanurate Derivative of Pentamethylene Diisocyanate

A composition (hereinafter, referred to as derivative of PDI) containing an isocyanurate derivative of a pentamethylene diisocyanate was obtained in conformity with the description of Example 1 of Japanese Unexamined Patent Publication No. 2010-254764. The derivative of PDI had an equivalent of the isocyanate group of 168.

### Examples 1 to 17 and Comparative Examples 1 to 3

The first prepolymer component, and the second prepolymer component or the derivative of PDI were mixed according to each formulation described in Tables 1 to 3. In this manner, a polyisocyanate component (main agent) was obtained.

The appearance, the isocyanate group content, and the viscosity (30°C) of the polyisocyanate component are shown in Tables.

Further, 50 parts by mass of ACTCOL POP-3128 (trade name, vinyl monomer-modified polyol having a number average molecular weight of 6000 and an average number of hydroxyl groups of 3 (also referred to as a polymer polyol), hydroxyl equivalent of 2003, manufactured by Mitsui Chemicals, Inc.) and 50 parts by mass of ACTCOL T-1000 (trade name, polyether polyol having a number average molecular weight of 1000 and an average number of hydroxyl groups of 3, manufactured by Mitsui Chemicals, Inc.) were mixed. To the obtained mixture, 1 part by mass of dehydrating agent (molecular sieve) was added, and furthermore, 860 ppm of BL (catalyst, manufactured by NITTO KASEI CO., LTD., NEOSTANN U-100) were added. In this manner, a polyol component (curing agent) was obtained.

In this manner, a structural polyurethane adhesive including a polyisocyanate component and a polyol component was obtained.

### (Evaluation)

### 1. Tensile Strength (Elastic Modulus) and Elongation at Break (Elongation Properties)

The polyisocyanate component and the polyol component were mixed in a ratio in which the equivalent ratio (NCO/OH) was 1.05, and kneaded for one minute. The obtained mixture was applied to a test plate to be cured at room temperature, and thereafter, aged at room temperature (18 to 28°C, 45 to 55%RH) for one week.

Thereafter, the resulting cured product was punched with a No. 3 dumbbell in conformity with JIS K 7110 (1999) and aged for one day or more, and then, the tensile strength and the elongation at break were measured. The measurement conditions included a gauge length of 20 mm, and a tensile rate of 50 mm/min.

In addition, in the curing of the mixture described above, the foaming state of the vessel residue was visually confirmed and evaluated based on the following criteria.
Excellent: No foaming
Good: Slight foaming
Bad: Foaming

### 2. Shear Adhesive Test

A polypropylene plate (J707G, manufactured by Prime Polymer Co., Ltd.) was subjected to corona treatment and adjusted to have a wettability of 40 dyn/cm or more (JIS K 6768 (1999)). A piece with a width of 25 mm was cut out from the polypropylene plate. The cut piece was prepared as an adherend 1.

Meanwhile, a piece with a width of 25 mm was cut out from an ED-SPCC plate (JIS G 3141 (SPCC, SD), manufactured by Standard Test Piece) obtained by cation electrodeposition (ED) of a Steel Plate Cold Commercial (SPCC). The cut piece was prepared as an adherend 2.

Then, the polyisocyanate component and the polyol component were mixed in a ratio in which the equivalent ratio (NCO/OH) was 0.95. Next, glass beads (ASGB-60, manufactured by AS ONE Corporation., 0.250 to 0.355 mm) were added to the obtained mixture for adjustment of the layer thickness. The adding amount of the glass beads was adjusted so as to be 1% by mass with respect to the total amount of the polyisocyanate component, polyol component, and glass beads.

Thereafter, the obtained mixture was applied on the adherend 1. The adherend 1 and adherend 2 were brought into tight contact with each other so as to have the adhesive area of 25 mm ×12.5 mm and an adhesive layer thickness of 0.3 mm, cured at 25°C for one hour, and aged at room temperature (18 to 28°C, 45 to 55%RH) for one week. In this manner, a test plate was obtained. Three pieces of each test plate were prepared.

Using a tensile test machine (U-4410, manufactured by ORIENTEC CORPORATION), the shear peeling strength of the adherend 1 and the adherend 2 was measured at a tensile rate of 50 mm/min.

Further, the peeling state was visually confirmed and evaluated based on the following criteria.

Excellent: among three test plates, there were three plates in which a part of the adhesive layer was cohesively peeled.

Good: among three test plates, there were two plates in which a part of the adhesive layer was cohesively peeled, and one plate in which interface peeling occurred between the adhesive layer and the polypropylene plate.

Bad: among three test plates, there were 0 to 1 plate in which a part of the adhesive layer was cohesively peeled, and two to three plates in which interface peeling occurred between the adhesive layer and the polypropylene plate.

### [Table 1]

**Table 1**

| No. | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| | First Prepolymer Component | 90 | 90 | 90 | 95 | 80 | 70 | 80 | 80 | 90 |
| | Second Prepolymer Component (1) | 10 | - | - | - | - | - | 20 | - | - |
| | Second Prepolymer Component (2) | - | 10 | - | 5 | 20 | 30 | - | - | - |
| | Second Prepolymer Component (3) | - | - | 10 | - | - | - | - | 20 | - |
| | Second Prepolymer Component (4) | - | - | - | - | - | - | - | - | 10 |
| | Second Prepolymer Component (5) | - | - | - | - | - | - | - | - | - |
| | Second Prepolymer Component (6) | - | - | - | - | - | - | - | - | - |
| Main Agent (parts by mass) | Second Prepolymer Component (7) | - | - | - | - | - | - | - | - | - |
| | Second Prepolymer Component (8) | - | - | - | - | - | - | - | - | - |
| | Second Prepolymer Component (9) | - | - | - | - | - | - | - | - | - |
| | Second Prepolymer Component (10) | - | - | - | - | - | - | - | - | - |
| | Second Prepolymer Component (11) | - | - | - | - | - | - | - | - | - |
| | Second Prepolymer Component (12) | - | - | - | - | - | - | - | - | - |
| | Second Prepolymer Component (13) | - | - | - | - | - | - | - | - | - |
| | Second Prepolymer Component (14) | - | - | - | - | - | - | - | - | - |
| | Derivative of PDI | - | - | - | - | - | - | - | - | - |
| | Appearance of Main Agent | Transparent | Transparent | Transparent | Transparent | Transparent | Transparent | Transparent | Slight Turbidity | Transparent |
| Properties | Isocyanate Group Content (% by mass) | 3.81 | 4.03 | 4.39 | 3.69 | 4.71 | 5.39 | 4.27 | 5.43 | 3.22 |
| | Viscosity (mPa.s/30°C) | 21000 | 23000 | 27000 | 21000 | 22000 | 29000 | 20000 | 32000 | 19000 |
| Equivalent Ratio (Main Agent NCO/Curing Agent OH) | | 1.05 | 1.05 | 1.05 | 1.05 | 1.05 | 1.05 | 1.05 | 1.05 | 1.05 |
| | Foaming State | Excellent | Excellent | Excellent | Excellent | Excellent | Excellent | Excellent | Excellent | Excellent |
| | Tensile Strength (M pa) | 3.1 | 3.3 | 3.6 | 3.1 | 3.6 | 4.0 | 3.1 | 3.6 | 3.2 |
| Evaluation | Elongation at Break (%) | 128 | 122 | 115 | 124 | 120 | 128 | 131 | 110 | 148 |
| | Adhesive Strength (M Pa) | 1.96 | 1.89 | 2.01 | 1.51 | 1.88 | 1.65 | 1.78 | 2.05 | 1.57 |
| | Peeling State | Excellent | Excellent | Excellent | Excellent | Excellent | Excellent | Excellent | Excellent | Excellent |

### [Table 2]

**Table 2**

| No. | | Ex. 10 | Ex. 11 | Ex. 12 | Ex. 13 | Ex. 14 | Ex. 15 | Ex. 16 | Ex. 17 |
|---|---|---|---|---|---|---|---|---|---|
| | First Prepolymer Component | 90 | 90 | 90 | 90 | 90 | 90 | 90 | 90 |
| | Second Prepolymer Component (1) | - | - | - | - | - | - | - | - |
| | Second Prepolymer Component (2) | - | - | - | - | - | - | - | - |
| | Second Prepolymer Component (3) | - | - | - | - | - | - | - | - |
| | Second Prepolymer Component (4) | - | - | - | - | - | - | - | - |
| | Second Prepolymer Component (5) | - | - | - | 10 | - | - | - | - |
| Main Agent (parts by mass) | Second Prepolymer Component (6) | 10 | - | - | - | - | - | - | - |
| | Second Prepolymer Component (7) | - | 10 | - | - | - | - | - | - |
| | Second Prepolymer Component (8) | - | - | - | - | - | - | - | - |
| | Second Prepolymer Com ponent (9) | - | - | - | - | - | - | - | - |
| | Second Prepolymer Component (10) | - | - | 10 | - | - | - | - | - |
| | Second Prepolymer Component (11) | - | - | - | - | 10 | - | - | - |
| | Second Prepolymer Component (12) | - | - | - | - | - | 10 | - | - |
| | Second Prepolymer Component (13) | - | - | - | - | - | - | 10 | - |
| | Second Prepolymer Component (14) | - | - | - | - | - | - | - | 10 |
| | Derivative of PDI | - | - | - | - | - | - | - | - |
| | Appearance of Main Agent | Trasnparent | Trasnparent | Trasnparent | White Turbidity | Transparent | Transparent | Transparent | Transparent |
| Properties | Isocyanate Group Content (% by mass) | 4.09 | 4.02 | 3.63 | 3.97 | 4.07 | 4.04 | 4.10 | 4.18 |
| | Viscosity (m Pa.s/30°C) | 21000 | 26000 | 20000 | 28000 | 21000 | 20000 | 20000 | 23000 |
| Equivalent Ratio (Main Agent NCO/Curing AgentOH) | | 1.05 | 1.05 | 1.05 | 1.05 | 1.05 | 1.05 | 1.05 | 1.05 |
| | Foaming State | Excellent | Excellent | Excellent | Good | Excellent | Excellent | Excellent | Excellent |
| | Tensile Strength (M pa) | 3.1 | 3.1 | 3.2 | 3.2 | 3.1 | 3.1 | 3.1 | 3.1 |
| Evaluation | Elongation at Break (%) | 110 | 135 | 141 | 122 | 126 | 142 | 130 | 125 |
| | Adhesive Strength (M Pa) | 1.50 | 1.62 | 1.77 | 1.23 | 1.89 | 1.85 | 1.62 | 1.78 |
| | Peeling State | Excellent | Excellent | Excellent | Good | Excellent | Excellent | Excellent | Excellent |

### [Table 3]

**Table 3**

| No. | | Com parative Ex. 1 | Com parative Ex. 2 | Com parative Ex. 3 | Com parative Ex. 4 | Com parative Ex. 5 | Com parative Ex. 6 |
|---|---|---|---|---|---|---|---|
| | First Prepolymer Com ponent | 100 | 99 | 90 | 60 | 90 | 90 |
| | Second Prepolymer Com ponent (1) | - | - | - | - | - | - |
| | Second Prepolymer Com ponent (2) | - | 1 | - | 40 | - | - |
| | Second Prepolymer Com ponent (3) | - | - | - | - | - | - |
| | Second Prepolymer Com ponent (4) | - | - | - | - | - | - |
| | Second Prepolymer Com ponent (5) | - | - | - | - | - | - |
| Main Agent (parts by mass) | Second Prepolymer Component (6) | - | - | - | - | - | - |
| | Second Prepolymer Component (7) | - | - | - | - | - | - |
| | Second Prepolymer Component (8) | - | - | - | - | 10 | - |
| | Second Prepolymer Component (9) | - | - | - | - | - | 10 |
| | Second Prepolymer Component (10) | - | - | - | - | - | - |
| | Second Prepolymer Component (11) | - | - | - | - | - | - |
| | Second Prepolymer Component (12) | - | - | - | - | - | - |
| | Second Prepolymer Component (13) | - | - | - | - | - | - |
| | Second Prepolymer Component (14) | - | - | - | - | - | - |
| | Derivative of PDI | - | - | 10 | - | - | - |
| | Appearance of Main Agent | Transparent | Transparent | Transparent | Transparent | White Turbidity | Transparent |
| Properties | Isocyanate Group Content (% by mass) | 3.35 | 3.42 | 5.47 | 6.07 | 4.66 | 3.29 |
| | Viscosity (m Pa.s/30°C) | 24000 | 24000 | 21000 | 32000 | - | 21000 |
| Equivalent Ratio (Main Agent NCO/Curing AgentOH) | | 1.05 | 1.05 | 1.05 | 1.05 | 1.05 | 1.05 |
| | Foaming State | Good | Good | Excellent | Bad | Excellent | Excellent |
| | Tensile Strength (Mpa) | 3.0 | 3.0 | 3.7 | 3.5 | 3.8 | 3.4 |
| Evaluation | Elongation at Break (%) | 108 | 106 | 93 | 98 | 127 | 114 |
| | Adhesive Strength (M Pa) | 0.83 | 0.80 | 1.02 | 1.21 | 0.97 | 0.98 |
| | Peeling State | Bad | Bad | Bad | Bad | Bad | Bad |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The structural polyurethane adhesive of the present invention is suitably used in a structure formed from a plurality of members to adhere the members.

## Claims

1. A structural polyurethane adhesive comprising:
a polyisocyanate component and a polyol component containing a macropolyol having a number average molecular weight of 500 or more and 10000 or less, and an average number of hydroxyl groups of 1.9 or more and 4.0 or less, wherein
the polyisocyanate component contains
a first prepolymer component containing a first isocyanate group-terminated urethane prepolymer which is a reaction product of a first material polyisocyanate consisting of an aromatic polyisocyanate, and a first material polyol containing a macropolyol; and
a second prepolymer component containing a second isocyanate group-terminated urethane prepolymer which is a reaction product of a second material polyisocyanate consisting of an araliphatic polyisocyanate and/or an aliphatic polyisocyanate, and a second material polyol containing a polyether polyol having a number average molecular weight of 160 or more and 4800 or less, and
a ratio of the second prepolymer component with respect to the total amount of the first prepolymer component and the second prepolymer component is 2% by mass or more and 35% by mass or less.

2. The structural polyurethane adhesive according to claim 1, wherein
a content ratio of the second material polyisocyanate with respect to the total amount of the second prepolymer component is 1.0% by mass or less.

3. The structural polyurethane adhesive according to claim 1, wherein
the second material polyisocyanate consists of an araliphatic polyisocyanate and/or an alicyclic polyisocyanate.

4. The structural polyurethane adhesive according to claim 1, wherein
the second material polyol contains a polyether polyol having an average number of hydroxyl groups of 2 or more and 4 or less.

5. The structural polyurethane adhesive according to claim 1 being a two-component curable adhesive including a main agent consisting of the polyisocyanate component and a curing agent consisting of the polyol component.

6. The structural polyurethane adhesive according to claim 1 being a solventless-type adhesive.
